# EUROPEAN PATENT SPECIFICATION

(11) **EP 0 520 659 B1**
(45) Date of publication and mention of the grant of the patent: **12.10.1994**
(21) Application number: 92305415.9
(22) Date of filing: 12.06.1992
(51) Int. Cl.: F02M 43/04, F02M 21/02, F02M 61/18

(54) **Improved fuel injection valve arrangement and engine using such an arrangement**
Kraftstoffeinspritzventil und mit diesem ausgestatteter Motor
Soupape d'injection de combustible, et moteur en étant équipé

(30) Priority: 25.06.1991 FI 913093
(43) Date of publication of application: 30.12.1992
(73) Proprietor: Oy Wärtsilä Diesel International Ltd., 00530 Helsinki (FI)
(72) Inventor: Nylund, Ingemar, SF-65610 Korsholm (FI)
(74) Representative: Newby, John Ross

(56) References cited:
- EP-A- 0 371 759
- EP-A- 0 403 844
- DE-A- 2 924 128
- GB-A- 494 238
- US-A- 4 742 801
- PATENT ABSTRACTS OF JAPAN VOL. 11, NO. 57 (M-564)21 FEBRUARY 1987 & JP-A-61 218 764
- PATENT ABSTRACTS OF JAPAN VOL. 11, NO. 339 (M-639)6 NOVEMBER 1987 & JP-A-61 121 854

## Description

The invention relates to a fuel injection valve arrangement according to the preamble of claim 1 and to an engine using such a valve arrangement.

When using gaseous fuel in internal combustion engines the gaseous fuel is injected according to one concept, especially in diesel engines, directly into the combustion chamber of the engine cylinder. Due to the high ignition temperature of the gas used, e.g. metan, the ignition of gaseous fuel is accomplished by pre-injection of some more easily combustible fuel, e.g. diesel oil. This type of engine is called a dual fuel engine.

In dual fuel engines the fuel injection is with advantage accomplished using a combined injection valve structure, where the valve housing contains axially concentric, independently controllable valve means for gaseous fuel as well as for the pre-injection fuel used for ignition of the gaseous fuel. Thereby the valve means for the gaseous fuel may include an axially movable, cylindrical, substantially hollow valve member, inside of which there is a separate valve means for the pre-injection fuel. In order to decrease friction and due to the fact that combustion gases tend to penetrate from the combustion chamber of the cylinder into the clearance between the said valve member and the valve housing, the mantle surface of the valve member is sealed to the valve housing by means of high pressure lubrication oil. However, if the engine is operated using diesel oil only, which may occur when the engine is operated under a low load, e.g. when starting and stopping the engine, the high pressure lubrication oil may flow into the nozzle orifices intended for the gaseous fuel, which consequently may clog up completely with carbon residue. No matter when the switch over to operating the engine again with gaseous fuel occurs, the relatively lower gas pressures prevailing in these circumstances are not sufficient to reopen the clogged nozzle orifices, and a difficult and time-consuming clearing of the orifices is required. If, on the other hand, the supply of lubrication oil is cut off or its pressure is reduced, combustion gases are free to penetrate into the clearance between the valve member and the valve housing to cause damage.

An aim of the invention is to provide a new, improved fuel injection valve arrangement for a dual fuel engine operating with two types of fuel by means of which the drawbacks described above are at least eased and preferably eliminated.

This aim of the invention can be met with an arrangement in accordance with the invention according to which the end part of said valve member located adjacent to the combustion chamber of the cylinder is arranged to control the supply of the gaseous fuel from inside the valve member into said at least one nozzle orifice, said end part being designed to exhibit two sealing surfaces placed on opposite sides of said at least one nozzle orifice, in the moving direction of the valve member, and arranged to cooperate with corresponding sealing surfaces provided on the valve housing. Thus, there are first sealing surfaces provided to function as a valve controlling supply of the gaseous fuel, and second sealing surfaces correspondingly provided, on the one hand, to prevent the combustion gases from penetrating into the clearance between the valve member and the valve housing and, on the other hand, to prevent lubrication oil, fed under pressure into this clearance from flowing into the nozzle orifices for gaseous fuel under different operating conditions of the dual fuel engine.

In practice, the sealing surfaces located closer to the combustion chamber of the cylinder control supply of the gaseous fuel and the outer sealing surfaces prevent the clearance between the valve member and the valve housing coming into communication with the combustion chamber of the cylinder.

The sealing surfaces are with advantage constructed to be frusto-conical. By this means it is possible to arrange a slightly different cone angle for the sealing surfaces in the valve member and the sealing surfaces in the valve housing cooperating therewith so that when the valve is closed a higher surface pressure appears against the sealing surfaces located closer to said combustion chamber of the cylinder. This arrangement can secure precise operation of the gaseous fuel supply system and provides, nevertheless, in practice, sufficient disconnection of said clearance from the combustion chamber of the cylinder, to prevent the lubrication oil from flowing into the nozzle orifices. Naturally it is also possible, if desired, to affect the function of the sealing surfaces by selecting the respective materials from which they are constructed such that the material of the sealing surfaces in either member is softer and deforms within the range of elastic deformation, whereby operational tightness of all the sealing surfaces can be secured.

The invention will now be further described, by way of example, with reference to the accompanying drawings, in which
Figure 1 shows, in cross-section, a valve arrangement according to the invention,
Figure 2 is an enlarged view of the area within the circle A of Figure 1, and
Figure 3 is a further enlarged view of the sealing surfaces of the valve member.

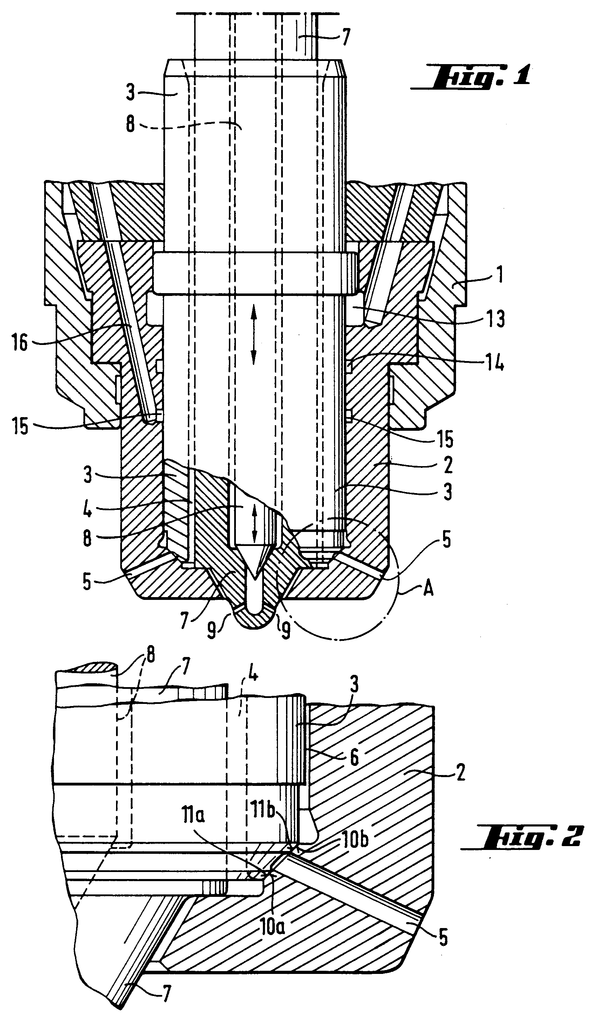

The reference 1 in Figure 1 indicates a support, which encloses valve means for injecting gaseous fuel into an engine cylinder (not shown), on the one hand, and for pre-injection fuel used for ignition of the gaseous fuel, on the other hand, and by means of which the injection valves are supported to the block of the engine (also not shown).

Reference 2 in each Figure indicates a valve housing for the injection valve for the gaseous fuel, which is provided with a number of nozzle orifices 5 opening into a combustion chamber in the engine. Inside the valve housing 2 there is an axially movable valve member 3, which is sealed with lubrication oil to the valve housing 2 and which, for its part, encloses a valve means for the pre-injection fuel. This valve means includes a further valve housing 7, and inside it, an axially movable valve member 8, which controls supply of the pre-injection fuel from a space provided between the further valve housing 7 and the valve member 8 through nozzle orifices 9 of the valve member 8 into a cylinder of the engine for ignition of the gaseous fuel.

Figure 1 also shows a lubrication oil groove 13, into which lubrication oil is fed at high pressure to flow into a clearance 6 provided between the valve housing 2 and the valve member 3 in order to decrease friction and at the same time to prevent combustion gases from penetrating into said clearance 6 through the nozzle orifices 5. Cylindrical oil grooves 14 and 15 accumulate and spread the lubrication oil around the valve member 3, which is led away through the last-mentioned oil groove 15 into a channel 16 connected to it.

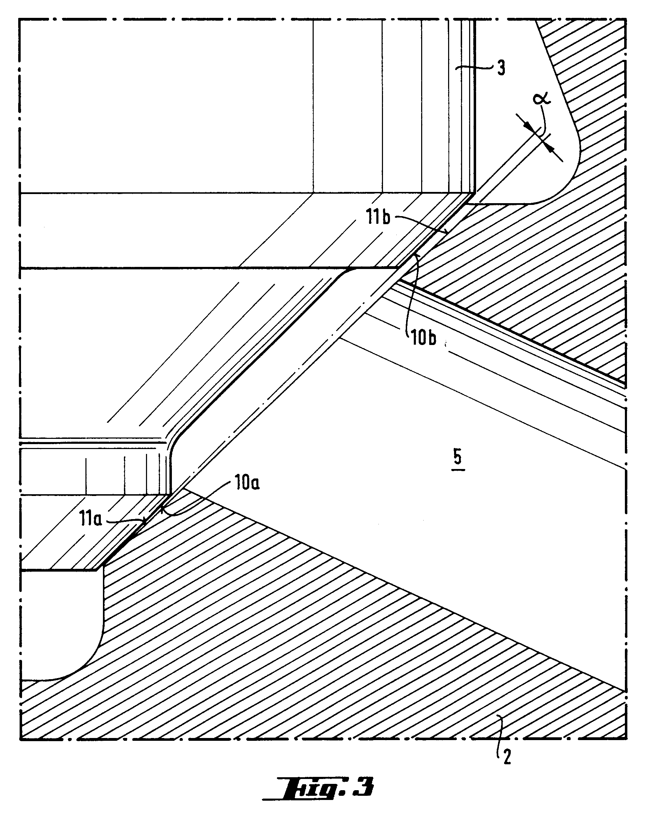

The end part of the valve member 3 located adjacent to the combustion chamber is formed so as to comprise two sealing surfaces 10a and 10b (see Figure 2) located on either side of the nozzle orifices 5 in the moving direction of the valve member 3 within the housing 2 and which are in co-operation with corresponding sealing surfaces 11a and 11b on the valve housing 2. By means of the sealing surfaces 10a and 11a, the valve member 3 controls supply of the gaseous fuel from a space 4 provided between the further valve housing 7 and the valve member 3 through the nozzle orifices 5 into the combustion chamber of the cylinder.

When the engine is running under partial load only using diesel fuel fed through the valve 7, 8 or possibly through an entirely separate valve which is in connection with the combustion chamber of the cylinder, the pressures inside the engine cylinder are at a considerably lower level. As a consequence the lubrication oil fed at high pressure into the clearance 6 between the valve housing 2 and the valve member 3 tends to flow into the nozzle orifices 5, where it can form carbon residue and may entirely clog up the nozzle orifices 5. This is eliminated by means of the sealing surfaces 10b and 11b.

Figure 3 shows how the sealing surfaces 10a and 10b on the mantle surface of the valve member 3 and the sealing surfaces 11a and 11b provided on the valve housing 2 arranged in co-operation therewith have a slightly different semi-cone angle so that when the valve is closed, the sealing surfaces 10a and 11a, which are closer to the combustion chamber of the cylinder, are subject to a higher surface pressure than the more remote sealing surfaces 10b, 11b. In this way it is possible to provide a precise supply of the gaseous fuel, the sealing surfaces otherwise remaining tight. This does not, however, have any essential effect on the function of the sealing surfaces 10b and 11b, because the sealing oil naturally is considerably thicker than the gaseous fuel. The difference of semi-cone angles of the sealing surfaces (marked with α in Figure 3) may be, for example, from 1° to 2°.

The material from which one of the members 2, 3 is constructed is softer than the material from which the other member is constructed whereby the softer material deforms within the range of elastic deformation to ensure that operational tightness of the sealing surfaces 10a, 11a is secured.

## Claims

1. An improved fuel injection valve arrangement for a dual fuel engine operated using two types of fuel, comprising a valve housing (2), which includes at least one nozzle orifice (5) opening into a combustion chamber of a cylinder in the dual fuel engine and which further includes first valve means (2, 3) for gaseous fuel and, independently controllable thereof, second valve means (7, 8) for pre-injection fuel used for ignition of the gaseous fuel, whereby the valve means for the gaseous fuel comprises an axially movable, cylindrical, substantially hollow valve member (3), the mantle surface of which is sealed to the valve housing (2), at least at the end part thereof located adjacent to the combustion chamber of the cylinder, and inside of which there is the second separate valve means (7, 8) for the pre-injection fuel, characterised in that said end part of said valve member (3) is arranged to control the supply of the gaseous fuel from inside the valve member (3) into said at least one nozzle orifice (5), said end part being designed to exhibit two sealing surfaces (10a, 10b) placed on opposite sides of said at least one nozzle orifice (5) in the moving direction of the valve member (3) and arranged to cooperate with corresponding sealing surfaces (11a, 11b) provided on the valve housing (2).

2. An injection valve arrangement according to claim 1, characterised in that the sealing surfaces (10a, 11a) which are closer to the combustion chamber of the cylinder control supply of the gaseous fuel and the more remote sealing surfaces (10b, 11b) prevent a clearance (6) between the valve member (3) and the valve housing (2) coming into communication with the combustion chamber of the cylinder.

3. An injection valve arrangement according to claim 1 or claim 2, characterised in that said sealing surfaces (10a, 10b; 11a, 11b) are frusto-conical in form.

4. An injection valve arrangement according to claim 3, characterised in that the sealing surfaces (10a, 10b) on the valve member (3) and the sealing surfaces (11a, 11b) on the valve housing (2) co-operating therewith have a slightly different semi-cone angle causing a higher surface pressure to appear at the sealing surfaces (10a, 11a) located closer to the combustion chamber of the cylinder than appears at the more remote sealing surfaces (10b, 11b) when the valve is closed.

5. An injection valve arrangement according to claim 4, characterized in that the semi-cone angle of the surfaces (10a, 11a) located closer to the combustion chamber is between 1° and 2° greater than the semi-cone angle of the more remote sealing surfaces (10b, 11b).

6. An injection valve arrangement according to claim 4 or claim 5, characterized in that the material from which one of the members (2, 3) is constructed is softer than the material from which the other member is constructed whereby said one member deforms within the range of elastic deformation to ensure that operational tightness of the sealing surfaces (10a, 11a) is secured.

7. A dual fuel engine characterized in that it incorporates a fuel injection valve arrangement as claimed in any one preceding claim.

## Patentansprüche

1. Verbesserte Kraftstoffeinspritzventilanordnung für einen Zweistoffmotor, der unter Verwendung von zwei Arten von Kraftstoff betrieben wird, mit einem Ventilgehäuse (2), welches mindestens eine Düsenöffnung (5) hat, die in eine Brennkammer eines Zylinders im Zweistoffmotor mündet und ferner eine erste Ventileinrichtung (2, 3) für gasförmigen Kraftstoff und davon unabhängig steuerbar, eine zweite Ventileinrichtung (7, 8) für Voreinspritzkraftstoff umfaßt, welcher zum Zünden des gasförmigen Kraftstoffs benutzt wird, wodurch die Ventileinrichtung für den gasförmigen Kraftstoff einen axial beweglichen, zylindrischen, im wesentlichen hohlen Ventilschließkörper (3) aufweist, dessen Mantelfläche gegenüber dem Ventilgehäuse (2) mindestens in dem Endbereich desselben, der sich in der Nähe der Brennkammer des Zylinders befindet, abgedichtet ist, und in dessen Innerem sich eine zweite, gesonderte Ventileinrichtung (7, 8) für den Voreinspritzkraftstoff befindet, dadurch gekennzeichnet, daß der Endbereich des Ventilschließkörpers (3) so angeordnet ist, daß er die Zufuhr des gasförmigen Kraftstoffs aus dem Inneren des Ventilschließkörpers (3) in die mindestens eine Düsenöffnung (5) steuert, wobei der Endbereich so gestaltet ist, daß er zwei Dichtungsflächen (10a, 10b) an entgegengesetzten Seiten der mindestens einen Düsenöffnung (5) in Bewegungsrichtung des Ventilschließkörpers (3) hat, die so angeordnet sind, daß sie mit entsprechenden Dichtungsflächen (11a, 11b) am Ventilgehäuse (2) zusammenwirken.

2. Einspritzventilanordnung nach Anspruch 1, dadurch gekennzeichnet, daß die Dichtungsflächen (10a, 11a), die der Brennkammer des Zylinders näher sind, die Zufuhr des gasförmigen Kraftstoffs steuern, und daß die weiter entfernten Dichtungsflächen (10b, 11b) verhindern, daß ein Zwischenraum (6) zwischen dem Ventilschließkörper (3) und dem Ventilgehäuse (2) mit der Brennkammer des Zylinders in Verbindung gelangt.

3. Einspritzventilanordnung nach Anspruch 1 oder 2, dadurch gekennzeichnet, daß die Dichtungsflächen (10a, 10b; 11a, 11b) kegelstumpfförmige Gestalt haben.

4. Einspritzventilanordnung nach Anspruch 3, dadurch gekennzeichnet, daß die Dichtungsflächen (10a, 10b) am Ventilschließkörper (3) und die damit zusammenwirkenden Dichtungsflächen (11a, 11b) am Ventilgehäuse (2) einen geringfügig unterschiedlichen Halbkegelwinkel haben, der bewirkt, daß ein höherer Oberflächendruck an den der Brennkammer des Zylinders näher liegenden Dichtungsflächen (10a, 11a) erscheint als an den weiter entfernten Dichtungsflächen (10b, 11b), wenn das Ventil geschlossen ist.

5. Einspritzventilanordnung nach Anspruch 4, dadurch gekennzeichnet, daß der Halbkegelwinkel der der Brennkammer näher liegenden Flächen (10a, 11a) zwischen 1° und 2° größer ist als der Halbkegelwinkel der weiter entfernten Dichtungsflächen (10b, 11b).

6. Einspritzventilanordnung nach Anspruch 4 oder 5, dadurch gekennzeichnet, daß der Werkstoff, aus dem eines der Glieder (2, 3) gebaut ist, weicher ist als der Werkstoff, aus dem das andere Glied gebaut ist, wodurch sich das eine Glied innerhalb des Bereichs elastischer Verformung verformt, um sicherzustellen, daß die betriebsmäßige Dichtheit der Dichtungsflächen (10a, 11a) gewährleistet ist.

7. Zweistoffmotor, dadurch gekennzeichnet, daß er eine Kraftstoffeinspritzventilanordnung gemäß einem der vorhergehenden Ansprüche enthält.

## Revendications

1. Un agencement perfectionné de vanne d'injection de carburant pour un moteur à deux carburants qui fonctionne en utilisant deux types de carburants, comprenant un carter (2) de vanne qui inclut au moins un orifice (5) de buse s'ouvrant dans une chambre de combustion d'un cylindre du moteur à deux carburants et qui inclut en outre un premier moyen de vanne (2, 3) pour un carburant gazeux et un deuxième moyen de vanne (7, 8), réglable indépendamment du précédent, pour un carburant de préinjection utilisé pour l'allumage du carburant gazeux, le moyen de vanne du carburant gazeux comprenant un élément de vanne sensiblement creux, cylindrique, mobile axialement (3) dont la surface d'enveloppe est raccordée de façon étanche au carter (2) de vanne, au moins à sa partie d'extrémité qui est située près de la chambre de combustion du cylindre et à l'intérieur de laquelle il existe un deuxième moyen séparé de vanne (7, 8) pour le carburant de préinjection, caractérisé en ce que ladite partie d'extrémité dudit élément (3) de vanne est agencée de façon à régler l'amenée de carburant gazeux depuis l'intérieur de l'élément (3) de vanne vers ledit orifice (5) au moins unique de buse, ladite partie d'extrémité étant réalisée de façon à présenter deux surfaces d'étanchéité (10a, 10b) placées sur des côtés opposés dudit orifice au moins unique (5) dans la direction de déplacement de l'élément (3) de vanne et agencées de manière à coopérer avec des surfaces d'étanchéité correspondantes (11a, 11b) formées sur le carter (2) de vanne.

2. Un agencement de vanne d'injection selon la revendication 1, caractérisé en ce que les surfaces d'étanchéité (10a, 11a) de l'alimentation de réglage du cylindre du carburant gazeux, qui sont plus proches de la chambre de combustion, et les surfaces d'étanchéité plus éloignées (10b, 11b) empêchent qu'un jeu (6) entre l'élément (3) de vanne et le carter (2) de vanne ne vienne en communication avec la chambre de combustion du cylindre.

3. Un agencement de vanne d'injection selon la revendication 1 ou la revendication 2, caractérisé en ce que lesdites surfaces d'étanchéité (10a, 10b; 11a, 11b) sont de forme tronconique.

4. Un agencement de vanne d'injection selon la revendication 3, caractérisé en ce que les surfaces d'étanchéité (10a, 10b) de l'élément (3) de vanne et les surfaces d'étanchéité (11a, 11b) du carter (2) de vanne qui coopèrent avec elles présentent un angle semi-conique légèrement différent qui provoque l'apparition, aux surfaces d'étanchéité (10a, 11a) situées plus près de la chambre de combustion du cylindre, d'une pression superficielle plus élevée que celle qui apparaît aux surfaces d'étanchéité plus distantes (10b, 11b) lorsque la vanne est fermée.

5. Un agencement de vanne d'injection selon la revendication 4, caractérisé en ce que l'angle semi-conique des surfaces (10a, 11a) situées plus près de la chambre de combustion est supérieur, d'une valeur comprise entre 1° et 2°, à l'angle semi-conique des surfaces d'étanchéité plus distantes (10b, 11b).

6. Un agencement de vanne d'injection selon la revendication 4 et la revendication 5, caractérisé en ce que la matière dont un premier des deux éléments (2, 3) est constitué est plus souple que la matière dont l'autre élément est constitué, grâce à quoi ledit premier élément se déforme à l'intérieur de la plage de déformation élastique afin d'assurer que l'étanchéité opérationnelle des surfaces d'étanchéité (10a, 11a) est assurée.

7. Un moteur à deux carburants caractérisé en ce qu'il incorpore un agencement de vanne d'injection de carburant selon l'une quelconque des revendications précédentes.
